# EUROPEAN PATENT APPLICATION

(11) **EP 1 296 233 A2**
(43) Date of publication of application: **26.03.2003**
(21) Application number: 02255072.7
(22) Date of filing: 19.07.2002
(51) Int. Cl.: G06F 9/44

(54) **Web page authoring tool**

(30) Priority: 27.07.2001 US 917435
(71) Applicant: GENERAL ELECTRIC COMPANY, Schenectady, NY 12345 (US)
(72) Inventor: Gorman, William Phillip, New York 12309 (US); Oster, Scott William, New York 12065 (US); Kniffin, Bethany Bleil, New York 12309 (US)
(74) Representative: Pedder, James Cuthbert

(57) **Abstract**

An authoring tool (102) can be used by an author, who may or may not have programming experience, to create complex input forms for the Internet. The authoring tool (102) provides visual components that permit an author to build both the layout and functionality of the input form without writing any programming code. The author can select an input field to be inserted in the input form from a list of input types. The author can then customize the visual layout and appearance of the input fields and can incorporate dynamic behavior into the input form by associating events, actions and error checking with each input field. The authoring tool (102) also provides a preview frame (206) that interactively shows the author the appearance of the input form, as the author is building the input form. Finally, once the author is satisfied with the input form that is being created, the author can use the authoring tool (102) to generate a file or web page (104) that is executable on the client side by any web browser (206).

## Description

The present invention relates generally to a tool for assisting a user to develop a web page. Specifically, the present invention relates to a tool for assisting a user to develop an input form web page with dynamic behavior.

Many applications hosted on the Internet or World Wide Web ("the Web") need to elicit data and information from the users of the application. Typically, this data and information collection is achieved using simple Hypertext Markup Language (HTML) input forms with various input types such as text fields, pull down menus, check boxes, buttons, etc. Simple, static HTML input forms for data collection can be developed using a variety of tools, such as Microsoft FrontPage® and Macromedia Dreamweaver. However, dynamic behavior, such as error checking and the formulation of questions that are dependent on previous answers, are often desired in input forms in addition to basic data collection functions.

One approach to producing this dynamic behavior using simple, static HTML forms is to build numerous simple input forms, each with a small subset of questions. The server then coordinates the input gathering by sending the client a new page based on the answers on the previous form. This approach has several drawbacks. One is that a web page would need to be constructed for every possible combination of inputs that could potentially be asked. A second shortcoming is that there is a continued dependence on server communication to provide the new pages. This produces an undesirable strain on the server as well as undesirable wait time for the client as the next page is downloaded. So if input forms with dynamic behavior are required, this approach is clearly not desirable. Ideally, a single page (or a small number of pages) could dynamically reconfigure or rearrange itself based on interaction with the user.

A second approach to producing dynamic behavior in input forms is to manually encode the logic in the web page, using available tools and languages such as Java applets, Java Server Pages and JavaScript, so the logic can execute on the client's machine. However, this approach also has drawbacks. First, each of these tools requires the input form author to have a significant programming and software production background. Additionally, the dynamic behavior must be hand coded and requires a very problem specific solution. This approach is clearly not feasible for a non-programmer, and is not desirable for a programmer due to the tedious nature of hand coding all the behaviors.

Therefore, what is needed is a visual development environment that can be used non-programmers to produce or generate input forms with dynamic behavior that can function on any standard web browser.

One embodiment of the present invention is directed to a method for developing a web page executable by a web browser. The method includes the steps of opening a visual development environment including a visual representation of a web page under development and selecting a field from a plurality of field types to be included in the web page. The selected field is inserted into the visual development environment and the visual appearance of the inserted field is customized using a visual editor. Further, the dynamic behavior of the inserted field is customized using at least one additional visual editor. The steps of selecting a field, inserting the selected field, customizing a visual appearance, and customizing the dynamic behavior are repeated until all desired fields are included in the web page. Finally, program code is generated in a single file executable by a web browser to implement the visual appearance and dynamic behavior customizations of the selected fields.

Another embodiment of the present invention is directed to a system to develop and provide a web application executable by a web browser. The system includes a computer and an authoring tool. The computer has a storage device and a processor. The authoring tool is stored on the computer and is configured for use by an author to generate a web application. The authoring tool comprises a visual development environment to generate a visual appearance and dynamic behavior for fields of the web application and a code generator to generate program code for the web application to implement the generated visual appearance and dynamic behavior of the fields of the web application in a single file executable by a web browser. The system also has at least one server communicating with the authoring tool. The at least one server includes means for providing access to the generated program code for the web application to an end-user having a web browser.

Still another embodiment of the present invention is directed to a computer program product for developing an input form executable by a web browser. The computer program product comprises computer instructions for executing the steps of providing a visual development environment. The visual development environment includes a visual display of an input form representing a current state of the input form. The computer program product has computer instructions for executing the steps of selecting an input field from a plurality of input field types, customizing a visual appearance of the selected input field using a visual editor of the visual development environment and customizing dynamic behavior of the selected input field using at least one additional visual editor of the visual development environment. The customized selected input field are then incorporated into the visual display of the input form in the visual development environment. The steps of selecting an input field, customizing a visual appearance of the selected input field, customizing dynamic behavior of the selected field, and incorporating the customized selected input field are repeated until all input fields are included in the input form. Finally, a single file of program code executable by a web browser is generated to implement the visual appearance and dynamic behavior of the selected input fields of the input form.

One advantage of the present invention is that it permits a user to easily generate an input form with dynamic behaviors, including error checking and interactions between input fields.

Another advantage of the present invention is that it permits non-programmers to create complex input forms without learning web development programming languages.

Still another advantage of the present invention is that input forms can be generated without requiring any hand-coding of behavior by the author, thereby reducing the amount of time required to produce complex input forms.

A further advantage of the present invention is that static input forms having dynamic behavior are generated that permit a user to enter information into an input form without being connected to a server computer.

The invention will now be described in greater detail, by way of example, with reference to the drawings, in which:-
Figure 1 illustrates a high level architecture of the operation of the present invention.
Figures 2 and 3 illustrate an authoring tool being used to create a first input form.
Figures 4-6 illustrate an authoring tool being used to create a second input form.
Figure 7 illustrates a special properties editor used in an authoring tool.

Whenever possible, the same reference numbers will be used throughout the figures to refer to the same parts.

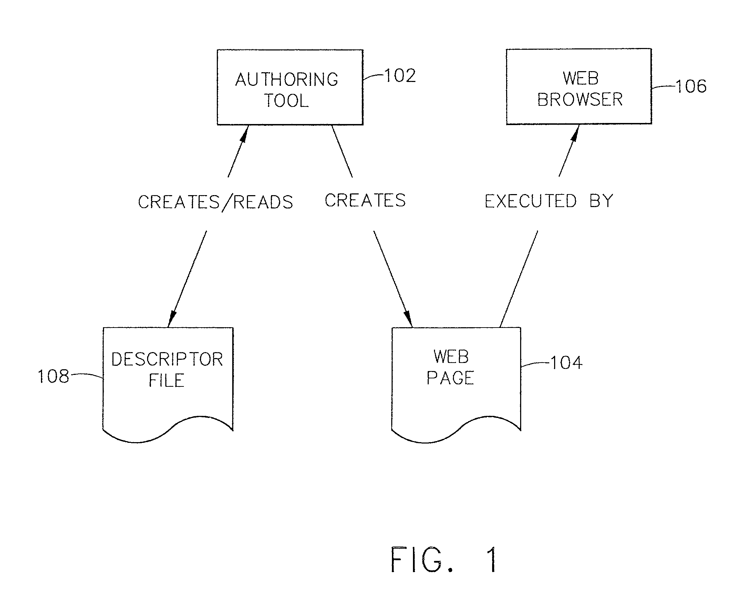

Figure 1 illustrates a high level architecture of the operation of the present invention. An authoring tool 102 is used to create web pages 104 that are executable by a web browser 106. The authoring tool 102 is used by an author or user to arrange, design and configure an input form that is to be implemented as a web page 104. During the design process, the author can save design information relating to the input form in a descriptor file 108. The author can then load the information from the descriptor file 108 into the authoring tool 102 at a later time to resume the designing of the input form. Once the author has completed designing the input form, the author can create a web page 104 implementing the input form using the authoring tool 102. The web page 104 implementing the input form can then be executed on a client computer by any person having a web browser 106 by preferably downloading the web page 104 from a server computer that stores the web page 104.

In another embodiment of the present invention, the authoring tool 102 can be incorporated as a component of a larger application and can be executed within the larger application. The authoring tool 102 can again be used to generate an input form, however, the authoring tool 102 preferably does not generate a web page 104 that implements the input form. The authoring tool 102 can generate an intermediate file for the input form that can be understood and executed by the larger application. The larger application can then use the information on the input form in the intermediate file to generate the appropriate program code for the larger application, which can include client side or server side programming code to be used with the web browser 106.

In a preferred embodiment of the present invention, the authoring tool 102 and the web browser 106 are each executed on separate computers. The computers for the authoring tool 102 and the web browser 106 are then linked, networked or connected together, typically, through one or more server computers. Preferably, the web page 104 is transferred from the computer with the authoring tool 102 to the one or more server computers, which then make the web page 104 accessible over a computer network to the computer with the web browser 106. In another embodiment, the computer with the authoring tool 102 can operate as a server computer and can make the web page 104 accessible over the computer network to the web browser 106 without using a separate server computer. The computer network is preferably the Internet, however any other type of network can also be used, for example, an Intranet, a local area network (LAN), a wide area network (WAN) or an Extranet. The authoring tool 102, any server programs and the web browser 106 can be executed on any type of general purpose computer having memory or storage devices (e.g. RAM, ROM, hard disk, CD-ROM, etc.), processing units (e.g. CPU, ALU, etc.) and input/output devices (e.g. monitor, keyboard, mouse, printer, etc.). The general purpose computer may also have communication devices (e.g. modems, network cards, etc.) for connecting or linking the general purpose computer to other computers.

In another embodiment of the present invention, the authoring tool 102, and the web browser 106 can be combined on a single computer. In this embodiment of the present invention there is no network connection between the authoring tool 102 and the web browser 106. The authoring tool 102 and the web browser 106 only have to communicate information internally between one another since they are combined on a single computer.

As discussed above, a user or author uses the authoring tool 102 to create web pages 104 for input forms. The authoring tool 102 is preferably a software application that is executed from an internal memory or storage device, e.g. RAM, ROM, hard disk, etc., of a computer used by the author. The authoring tool 102 can be loaded into the internal memory of the author's computer from a portable medium such as a CD-ROM, DVD-ROM, floppy disk, etc., that is inserted into the author's computer. Alternatively, the authoring tool 102 can be transferred or loaded directly into the internal memory of the author's computer through an electronic connection with another computer that has a stored copy of the authoring tool 102. In other words, the authoring tool 102 can be downloaded to the author's computer from another computer over a network connection or an Internet connection. In addition, the authoring tool 102 is preferably written in Java and executable by any computer with a Java Runtime Environment, but the authoring tool 102 can be written in any other language such as C or C++, and implemented as a software application for a Windows-based operating system or any other type of operating system, e.g. MacOS, Unix, etc., or as an application for use on either the client-side or server-side of a network such as an Extranet or the Internet. Finally, the authoring tool 102 may also be implemented as hardware and incorporated as part of the author's computer or workstation.

The authoring tool 102 preferably includes a visual editing or visual development environment and a code generator. In addition, the authoring tool 102 can also include other environments, utilities and tools that are helpful and useful in developing web pages 104. The visual editing environment is used for the creation and modification of both the dynamic behavior of the input form and the user interface and visual layout of the input form. The code generator is used for creating the appropriate program code to implement the input form created within the visual development environment as a web page 104 executable by the web browser 106. The code generator preferably generates HTML or JavaScript code for the web page 104, but can generate the web page 104 in any computer language executable by a web browser 106 without the requirement of an additional plug-in, modification, or add-on. However, in the embodiment where the authoring tool 102 is a component of a larger application, the code generator is used to generate the appropriate code for the larger application in an intermediate file.

Once the author has started executing the authoring tool 102, the author can begin to develop an input form. The author can begin creating a new input form or the author can resume working on an input form that had been previously created. To create a new input form, the author starts by opening a new visual workspace or development environment in the authoring tool 102 for the creation of the input form. In a similar manner, the author can load a stored input form, which may or may not be completed, into a visual workspace in the authoring tool 102 from a descriptor file 108 to resume working on a previously started input form. Tasks in the authoring tool 102, such as opening a new visual workspace, can be accomplished by selecting an appropriate menu option, selecting an appropriate button in a toolbar, entering an appropriate keyboard command or any other similar way for initiating an action on a computer.

The web page 104 of the input form designed by the author preferably includes one or more visible input fields, an invisible control engine and an invisible input object instantiated from a corresponding input type for each input field or group of input fields in the input form. Each input object controls the subsequent behavior of its corresponding input field or group of input fields on the web page 104. The input objects, through communication with the control engine, control the display of the input fields on the web page 104 of the input form and handle the events, actions, error checking, and all other functionality associated with the input field on the web page 104.

Each input object is an instantiation of an available input type. The control engine provides an abstract base input type from which all other input types are derived or subclassed in order to share common functionality. The input types subclassed from the abstract base input type are the base elements or components that are available to the author in the authoring tool 102 for placement on the input form as input fields. The input types are designed to interface and communicate with the control engine in a format understandable by the control engine and permit the input objects, once instantiated, to interface and communicate with the control engine to control the display of the input fields on the input form and handle the events, actions, error checking, and all other functionality associated with the input field.

Some examples of input types include standard web elements such as text fields, pull down menus, images, checkboxes, radio buttons, and any other similar type of element. Other input types can be subclassed further to include standard behaviors and formatting without requiring the author to configure the input type. For example, a SSN (Social Security Number) input type can be subclassed from a text field input type to appear the same as a normal text box, but limit the end-user to entering only numbers and dashes ("-") such that the format and number of the characters entered by the end-user matches that of a SSN. The abstract base input type, and the subclassing capabilities provided by the control engine permit the input types to be extensible. New input types can be defined and developed, as required, to meet the needs of authors creating input forms.

New input types and improvements to existing input types can easily be added to the authoring tool 102 to extend its capabilities. As mentioned above, the input types are extensible, using the structure provided by the control engine. The input types are also modular and self-contained, in that the definition of the input type includes the framework of the dynamic behavior, including the actions, events and error categories that the input type can support. The definition of the input type also includes information on visual editors for the dynamic behavior and the visual appearance of the input field, information on communicating with the control engine and information on generating web code, e.g. HTML or JavaScript for an instantiated object of that particular type to be executed by the web browser 106. A software developer can generate a new input type for the authoring tool 102 by providing all the necessary definitions and information for the new input type, and then making that newly defined input type available and accessible to an author using the authoring tool 102 by storing the new input type in a file of input types that is accessed by the authoring tool 102. Using a method similar to dynamic class loading, the authoring tool 102, on start-up, loads one or more files from a predefined location having definitions of available input types and can then provide all the input types in that file to an author creating an input form.

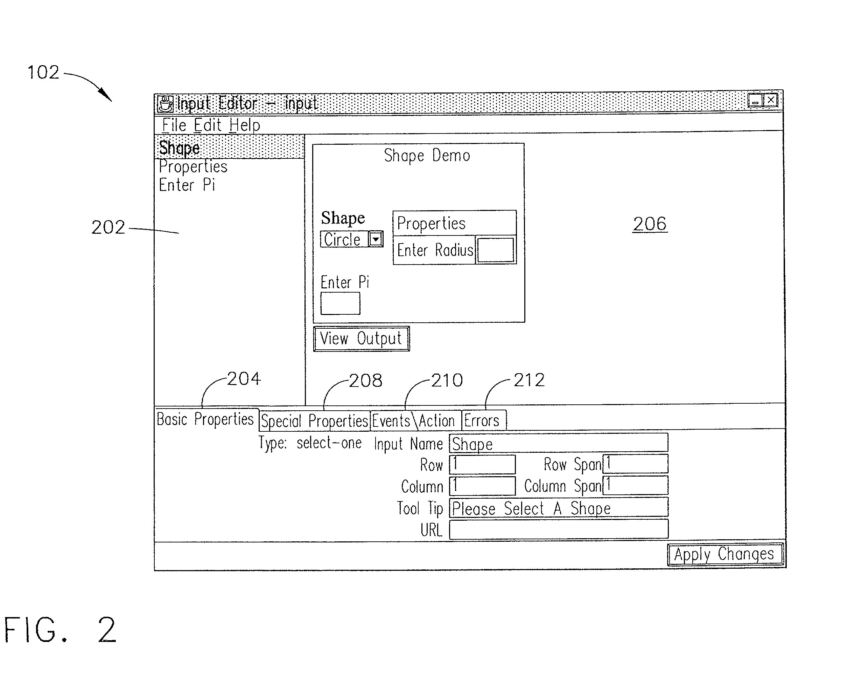

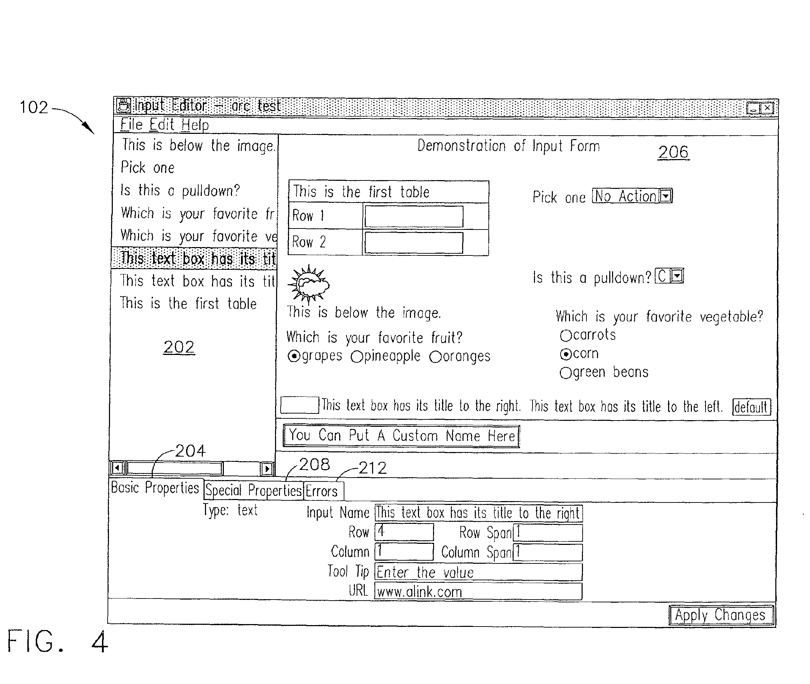

Figures 2-6 illustrate the visual development environment or input editor of the authoring tool 102 used in the creation of two different input forms. To create an input form, the author first starts with a new form in the input editor of the authoring tool 102, then the author designates input fields, such as text fields, pull down lists, menus, etc., for the input form by selecting an input type from a menu list of input types. The authoring tool 102 then instantiates an input object of that input type for the selected input field. As the author selects the input fields and instantiates the input objects by the corresponding input type, the input fields for the input form are listed in frame 202 of the input editor. Additionally, the input editor of the authoring tool 102 provides the author with visual editors for the customization of the input fields on the input form by configuring and customizing the corresponding input object which controls the input field. The author can customize the location and size of the input fields to design the layout of the input form using one of the visual editors.

Furthermore, there are other visual editors that permit the author to incorporate behavior into the input form by associating events, actions and error checking with each input field on the input form. The other visual editors available are provided to an author are dependent on the input type selected by the author, i.e. the visual editors are input-type specific, for assisting the author in defining behavior appropriate for the selected input field, and to define input-type specific properties, such as the choices for a pull down field. Thus, the authoring tool 102 provides the functionality for an author to build an input form by visually placing the input form's elements and input fields on the screen and defining the behavior of the input form by using simple editors that are customized for the selected input field.

The input editor of the authoring tool 102 also provides a preview frame 206 that interactively shows the author the appearance and behavior of their input form, as the author is building the input form. The preview frame 206 permits the author to test how the input form is going to look and function when the web page 104 is executed by a web browser 106. To permit the author to preview how the input form is going to look, the authoring tool 102 is continuously generating web code, i.e. HTML or JavaScript, that corresponds to each instantiated and configured input object that is created by the author for an input field similar to the process for generating the web page. The web code is then generated and the preview frame 206 is updated after the author has configured an input object and selected the appropriate command to add or implement the changes or new information.

Once the author has created a new input field, the author can customize the input field and assign some basic properties to the input field, for example, the input field's name, by using a basic properties visual editor 204 as shown in Figures 2-4. In addition, the author using the basic properties visual editor 204 can specify the location for the input field (row and column) and size of the input field (row span and column span) in the input form. The author using the basic properties visual editor 204 can also specify a short instruction or small item of information about the input field as a tool tip that is displayed on the web page 104 as a pop-up window or box on a mouse rollover of the displayed input field. Finally, to provide additional information or help to the user about an input field, the author can specify a uniform resource locator (URL) for the input field that links the user to a web page that includes the additional information or help using the basic properties visual editor 204.

In another embodiment of the present invention, the author can specify the location and size of the input field by visually manipulating the input field in the input form. The author can change the size of an input field in the input form by extending or retracting a side of the input field. The author can position the input field in the input form by selecting the desired input field and then dragging and dropping the input field in another location in the input form. In addition, other techniques for defining the size and location of an input field in the input form can also be used.

In addition to the basic properties visual editor 204, the authoring tool 102 can have other visual editors that provide additional and advanced customization features to the author. On the selection of certain input types, the author can access a special properties visual editor 208. The special properties visual editor 208 can be used to specify the list of choices for an input field, thereby simplifying the input of information by the end-user. For example, if the input type is a drop down list, the author can designate the choices that are displayed to the end-user in the drop down list.

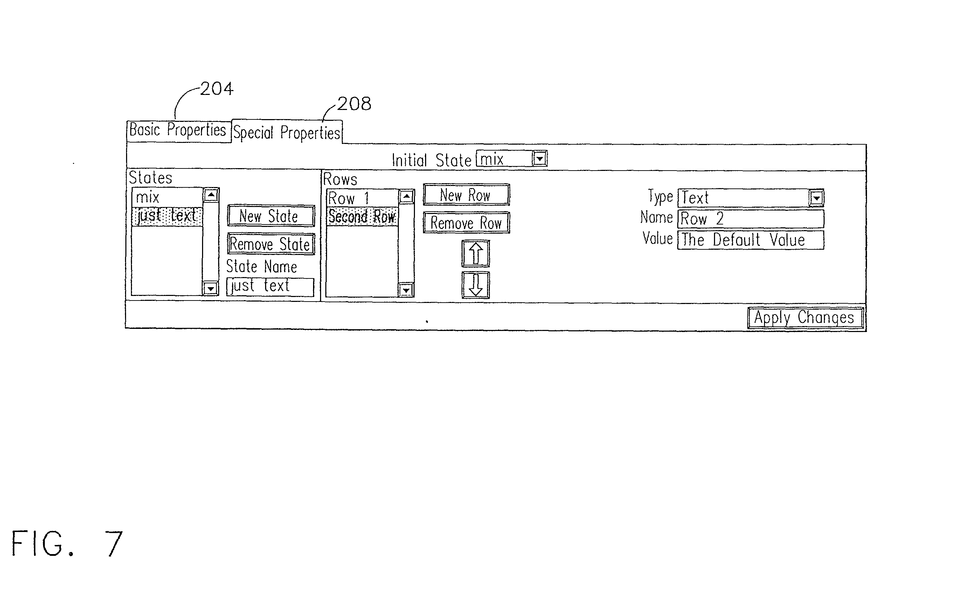

The special properties visual editor 208 can also be used to specify a user-defined collection of one or more states for an input object as shown in Figure 7. The state of an input object describes the condition of the corresponding input field. All input fields that are displayed on an input form can be displayed based on the state of the corresponding input object.

Figure 7 illustrates the special properties visual editor 208 for a table input type. Using the special properties visual editor 208, the author can add or remove states for the input object. In addition, the author can add and remove rows of the table for each of the different states. The author can also define some properties for a row such as the type of information to be inserted in the row and the displayed name of the row. When multiple states are defined, the author can also designate the initial state of the input object in the input form with the special properties visual editor 208.

As another example, a pull down input object can have one or more possible selections whenever the input field is displayed. The states for the pull down input object are all of the possible collections of selections that the author would ever want to display. There can be one state called "Alpha" which can correspond to the pull down input field having selections "A, B, and C." Additionally, there can be a state called "Numeric" which could can correspond to the pull down input field having selections "1, 2, 3, and 4." Whenever the input field is displayed, the input field is in one of these mutually exclusive states. Thus, the pull down input field in this example would display either "A, B, and C" or "1, 2, 3, and 4."

The states of an input object are all user-defined in name and quantity. The states of the input object capture and define the different variations of the input field that can be displayed on an input form. Thus, for a pull down input object, the states of the input object correspond to the sets of selections that can be included in a pull down list and for a table input object, the states of the input object correspond to the rows and columns that are included in the table. The user has the ability to change the state of an input object through Actions and to listen for when an input object's state has changed through Events, as described in greater detail below.

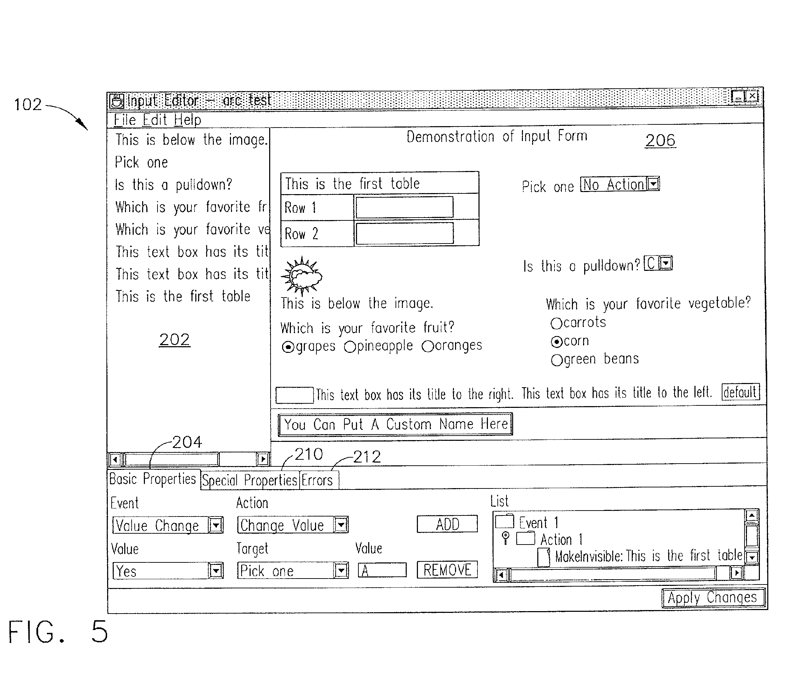

An events/actions visual editor 210 as shown in Figure 5 permits the author to assign dependencies between the different input fields. The author may want to control the end-user's access to a particular field or enable and disable other fields on the input form in response to the end-user's entry or selection in another input field. The control of the remaining input fields in the input form in response to an end-user's selection in a particular input field is accomplished through the appropriate setting of events and actions with the events/actions visual editor 210.

Events are definitions of situations that can occur when the end-user is interacting with the web page 104. For each input field and its corresponding input object, the author can create a list of events for that input field. Furthermore, for each event, the author can request one or more actions to occur in the input form. The events/actions visual editor 210 can display a list of the events assigned to an input field and the corresponding actions assigned to each of the events. Each input field has a predefined set of events for selection by the author to which the input object can respond, such as "On Value Change," "On State Change," "On Form Submit," etc., derived from the input field's input type. The author can build complex functionality, such as questions that are determined by the end-user's answers to another question on the input form, into the web page 104 using the predefined events for the input fields.

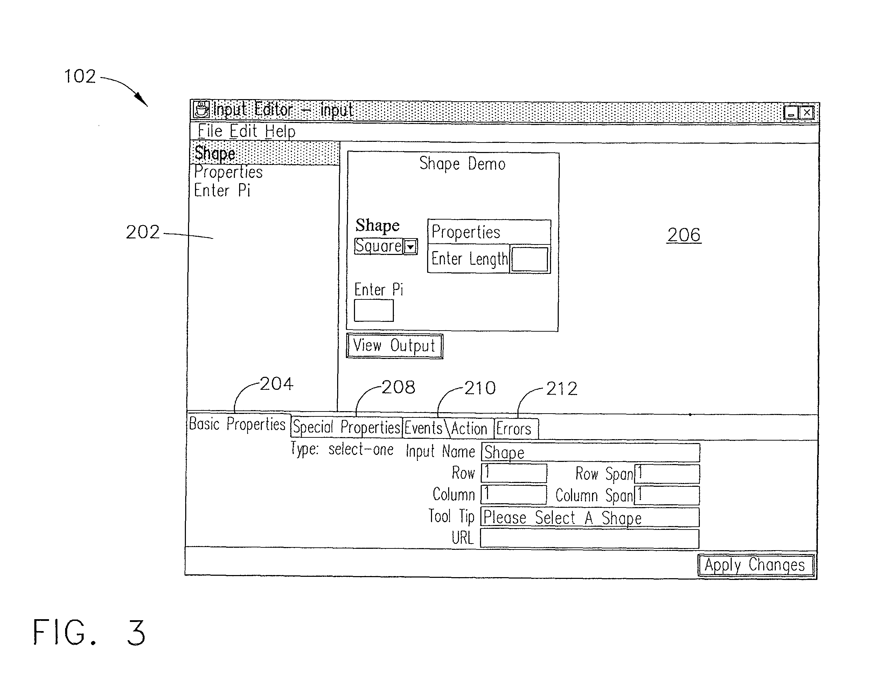

For example, an input form can be used to gather information to calculate the area of a shape as illustrated in the preview frame 206 of Figures 2 and 3. On this input form, the end-user has to provide the kind of shape they want to know the area of, and provide some characteristics of that shape. If the end-user selects a shape such as a circle, the end-user then has to enter information such as pi and the radius of the circle. However, if the end-user selects a shape such as a square, the end-user does not have to enter pi and a radius, but has to enter the length of a side of the square. Dynamic questions such as those described above, can be achieved very simply by detecting the event of a shape being selected by the end-user and then reconfiguring the content and layout of the input form to reflect the selected shape of the end-user.

For each event the author associates with an input field, the author can specify one or more actions to take place. The control engine and each input type have a predefined set of actions. Each action causes an operation in the input form to be executed. The control engine provides a number of general operations that affect the whole web page 104, such as submitting the input form to a computer, changing the layout of the input form and firing a group of events for the input form. Each input type provides a set of operations that permit the control engine to alter the input field, such as changing the input field's state, changing the input field's value, and enabling and disabling the input field. All of these operations are presented to the author as actions that can be associated with events. When the event occurs, the actions that the author associated with the event execute and the control engine performs the necessary operations within the input form.

To continue the shape example, assume the input form in the preview frame 206 of Figures 2 and 3 has a pull down list for selecting a shape with the possible selections of "Square" and "Circle," and two text boxes, one for the entry of pi and one for entry of the radius or length. The author can associate events with the shape selection pull down list and fire or execute a group of actions when "Square" is selected and another group of actions when "Circle" is selected. When "Circle" is selected, the control engine can be instructed to enable the pi text box and change the radius/length text box to prompt for the circle's radius by changing the states of those input objects. Thus, an event on the shape selection pull down list would be "On Change Value to Circle." This event has two actions associated with it: "Enable Pi" and "Change radius/length to Radius." When the end-user selects "Circle" on the shape selection pull down list, the event "On Change Value to Circle" executes and the desired operations will take place as the control engine executes the two actions as shown in Figure 2. Similarly when "Square" is selected the control engine can be instructed to disable the pi text box and change the radius/length text box to prompt for the length of the square's edge by changing the states of those input objects. Thus, a second event for the shape selection pull down list would be "On Change Value to Square." This event also has two actions associated with it: "Disable Pi" and "Change radius/length to Length." When the end-user selects "Square" on the shape selection pull down list, the event "On Change Value to Square" executes and the desired operations will take place as the control engine executes the two actions as shown in Figure 3.

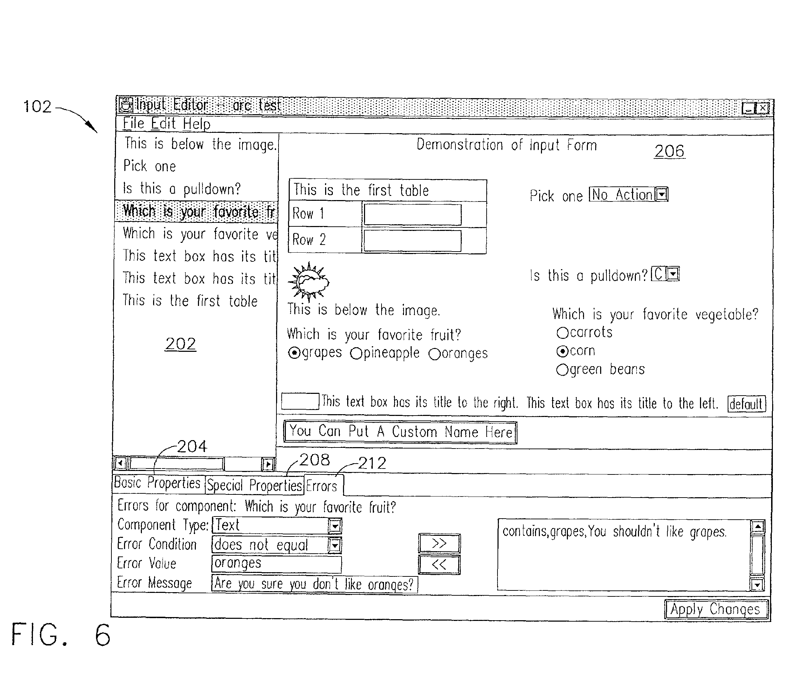

Further, the author can control the end-user's entry of information into an input field by setting parameters with an errors visual editor 212 as shown in Figure 6. Certain types of input fields require a specific type of information from the end-user and errors can occur in the application receiving the input information, if the appropriate information is not received. The errors visual editor 212 permits the author to limit the end-user's ability to enter information in specific input fields to just the type of information that is appropriate for the specific input field, i.e. a numeric only input or a text only input. The author can designate more than one error condition for an input field in the errors visual editor 212. In addition to limiting the user to a specific type of information for entry, the author can also limit the range of values of the specific type of information that can be entered by the user.

Error checking is the process of validating the end-user's input on the input form to ensure that the end-user's input satisfies the criteria expected by the subsequent application that will process the input data collected by the input form. For each input field, the author can create a list of error conditions to be checked for the input field. The error conditions, if present, prevent the end-user from submitting the input information entered into the web page 104 to a server computer for subsequent processing. The author can also specify a message to display to the user for each error condition that is present.

Each input type has a collection of predefined error categories that can be checked by the control engine, such as verifying that the input is either strictly numeric or strictly text, boundary checking, checking for specific answers and ensuring that a valid answer is given. For example, referring back to the shape example, the pi text field can be controlled by the author to accept numbers that range between 3 and 4 because entries of any other type or amount are not appropriate for a field that relates to the value of pi. Similarly, an input field that requires input of a day of the month can be restricted under the errors visual editor 212 to accept inputs of numbers between 1 and 31. In addition, a common error on input forms is that the entered information is not in the proper format. Input fields where the proper format is a concern, such as expecting a part number to be in a particular format, e.g. "XX-1234-56" can be configured to only accept values in the proper format with the errors visual editor 212. Another error condition that can be checked by the control engine is to ensure that there is no conflict between entries into two related input fields. For example, an error condition for an input field requesting an inside diameter of an object can be configured to check that the entry into the input field for the inside diameter is less than the entry into a corresponding input field that requests the outside diameter of the object. Finally, the author using the errors visual editor 212 can require the user to enter information into a particular field before permitting the user to continue, i.e. the user will not be permitted to leave a field blank.

When the end-user has completed entering data into the web page 104 of the input form and tries to submit the input form, the control engine verifies that with each input field and corresponding input object, no error conditions have been met and then submits the entered information from the input form to a server computer for the appropriate application, if no error conditions have been met. If the control engine determines that at least one of the error conditions for an input field is true, then the control engine displays an alert box to the end-user, with an author defined error message relating to that error condition, and does not submit the input form. Similar to actions and events, error checking is performed on the client side and thus does not require the input form to be submitted to a server computer or a new page to be downloaded from a server computer in order to identify and notify the user of input errors.

As discussed above, the author has the ability, using the authoring tool 102, to save the input form at any point so that the author can continue building the input form at another time. In one embodiment of the present invention, to save an input form, the authoring tool 102 writes all of the information necessary to recreate the input form in the authoring tool 102, including information on each input object and its layout and behavior, to the descriptor file 108. The descriptor file 108 can be opened and read by the authoring tool 102 to permit the author to recreate the state of the input form at the point of saving and then be able to resume building the input form. The descriptor file 108 can be in any format, but is preferably is in an Extensible Markup Language (XML) format because of the extensible nature of the authoring tool 102 and the modularity of the components. Alternatively, the authoring tool 102 can save the input form by generating a web page of the partially designed input form. The authoring tool 102 can then load the web page of the partially designed input form and recreate the partially designed input form in the authoring tool 102 by interpreting the information in the file of the web page created by the authoring tool 102 for the partially designed input form without having to generate a descriptor file 108.

When the author is done building the input form, the author simply has to select the appropriate command to have the authoring tool 102 generate the web page 104 implementing the input form. When the author generates a web page 104, the control engine for providing the static framework of the web page 104, the definitions of the input types used for interacting with the control engine and the instantiated input objects with the display and behavior information are all implemented into a single file that is executable by a web browser without using any plug-ins, modifications or add-ons. In each web page 104 generated by the authoring tool 102, the control engine and the definitions of the input types have substantially identical implementations. Only the implementation of the instantiated input objects are varied for the different web pages 104.

In a preferred embodiment of the present invention, the web page 104 generated by the authoring tool 102 does not require any interaction with a server computer until the information collected by the input form is to be submitted to the server computer. This permits the web page 104 to be downloaded to a web browser 106 on a computer that does not have a connection to a server computer a majority of the time, e.g. a personal digital assistant or a laptop computer. Once the web page 104 has been downloaded, an end-user can enter information into the web page 104 at the end-user's convenience, because the web page 104 is a static web page that includes the dynamic behavior and does not require any interaction with a server computer. The information entered into web page 104 can then be stored in the memory of the computer until a connection with a server computer can be established again to transfer or upload the entered information to the server computer.

In other embodiments, however, the input form can communicate with a server computer for different purposes before the submission of information. The input form may communicate with a server computer to retrieve information for the input form. In addition, portions of the input form or the entire input form can also be implemented as a server side application and executed by the server computer.

## Claims

1. A method for developing a web page (104) executable by a web browser (106), the method comprising the steps of:
opening a visual development environment, wherein the visual development environment includes a visual representation of the web page (104) under development;
selecting a field from a plurality of field types to be included in the web page (104);
inserting the selected field into the visual development environment;
customizing a visual appearance of the inserted field using a visual editor (204) of the visual development environment;
customizing dynamic behavior of the inserted field using at least one additional visual editor (208, 210, 212) of the visual development environment;
repeating the steps of selecting a field, inserting the selected field, customizing a visual appearance of the inserted field, and customizing dynamic behavior of the inserted field until all fields are included in the web page (104); and
generating, in a single file, program code executable by a web browser (106) to implement the visual appearance and dynamic behavior of the selected fields inserted into the visual development environment.

2. The method of claim 1 further comprising the steps of:
incorporating each inserted field into the visual representation of the web page (104), the incorporating of each inserted field includes incorporating the customizations to the visual appearance of the inserted field and incorporating the customizations to the dynamic behavior of the inserted field; and
displaying an updated visual representation (206) of the web page (104) after the step of incorporating each inserted field into the visual representation of the web page (104).

3. The method of claim 1 wherein said step of customizing dynamic behavior of the inserted field comprises the steps of:
providing a visual editor (208) for defining properties of the inserted field in response to the selection of at least one particular field type of the plurality of field types;
providing a visual editor (212) for defining error conditions for the inserted field in response to the selection of at least one particular field type of the plurality of field types; and
providing a visual editor (210) for defining control operations for the inserted field in response to the selection of at least one particular field type of the plurality of field types.

4. The method of claim 3 wherein said step of customizing dynamic behavior of the inserted field further comprises the step of defining a plurality of states for the inserted field with the visual editor (208) for defining properties, each state of the plurality of states having a corresponding set of properties for the inserted field.

5. The method of claim 3 wherein said step of customizing dynamic behavior of the inserted field further comprises the steps of:
defining dependencies between the inserted field and other inserted fields with the visual editor (210) for defining control operations;
defining events for the inserted field and defining corresponding actions for each defined event with the visual editor (210) for defining control operations; and
defining at least one error condition for the inserted field with the visual editor (212) for defining error conditions.

6. The method of claim 1 wherein:
said step of customizing a visual appearance of the inserted field further comprises the steps of:
customizing the location of the inserted field in the web page; and
customizing the size of the inserted field in the web page; and
said step of generating program code, in a single file, executable by a web browser comprises the steps of:
instantiating an object for each inserted field, each object being instantiated from a corresponding field type of the inserted field and including the customizations to the visual appearance of the inserted field and the customizations to the dynamic behavior of the inserted field;
providing a control engine to execute each instantiated object; and
generating at least one of HTML code and JavaScript code to implement each instantiated object, the control engine and the plurality of field types.

7. A system to develop and provide a web application (104) executable by a web browser (106), the system comprising:
a computer, said computer comprising a storage device and a processor;
an authoring tool (102), said authoring tool (102) being stored on said computer, said authoring tool (102) being configured for use by an author to generate a web application (104), said authoring tool (102) comprising a visual development environment to generate a visual appearance and dynamic behavior for fields of said web application (104) and a code generator to generate program code for said web application (104) to implement said generated visual appearance and dynamic behavior of said fields of said web application (104) in a single file executable by a web browser (106); and
at least one server communicating with said authoring tool (102), said at least one server comprising means for providing access to said generated program code for said web application (104) to an end-user having a web browser (106).

8. The system of claim 7 wherein said visual development environment further comprises:
means for displaying (206) a representation of a current state of said web application (104);
means for selecting a field from a plurality of field types for inclusion in said web application (104); and
a plurality of visual editors (204, 208, 210, 212) to customize a visual appearance and dynamic behavior of said selected field, said plurality of visual editors (204, 208, 210, 212) to customize said selected field is dependent on said field type of said selected field.

9. The system of claim 8 further comprising:
means for incorporating each selected field customized with said plurality of visual editors (204, 208, 210, 212) into said representation of said web application (104) displayed by said means for displaying (206);
means for instantiating an object for each selected field, each object being instantiated from a corresponding field type of said selected field and including said customizations to said visual appearance and said dynamic behavior of said selected field;
a control engine to execute each instantiated object; and
means for generating at least one of HTML code and JavaScript code to implement each instantiated object, the control engine and the plurality of field types.

10. The system of claim 8 wherein said plurality of visual editors (204, 208, 210, 212) comprises:
a visual editor (208) for defining properties of said selected field, said visual editor (208) for defining properties of said selected field comprises means for defining a plurality of states for said selected field, each state of said plurality of states has a corresponding set of properties for said selected field;
a visual editor (212) for defining error conditions for said selected field, said visual editor (212) for defining error conditions for said selected field comprises means for defining at least one error condition for said selected field; and
a visual editor (210) for defining control operations for said selected field, said visual editor (210) for defining control operation for said selected field comprises:
means for defining dependencies between said selected field and other selected fields;
means for defining events for said selected field; and
means for defining corresponding actions for each defined event.
